# EUROPEAN PATENT APPLICATION

(11) **EP 4 838 982 A2**
(43) Date of publication of application: **11.11.2026**
(21) Application number: 26205015.6
(22) Date of filing: 07.01.2020
(51) Int. Cl.: H04W 72/12

(54) **METHOD AND APPARATUS FOR FEEDBACK TRANSMISSION AND RECEPTION IN WIRELESS COMMUNICATION SYSTEM**

(30) Priority: 11.01.2019 KR 20190003773
(62) Document number(s) of the earlier application(s) in accordance with Art. 76 EPC: 20738918.0 / 3 881 470
(71) Applicant: Samsung Electronics Co., Ltd., Suwon-si, Gyeonggi-do 16677 (KR)
(72) Inventor: YEO, Jeongho, 16677 Suwon-si, Gyeonggi-do (KR); KIM, Taehyoung, 16677 Suwon-si, Gyeonggi-do (KR); RYU, Hyunseok, 16677 Suwon-si, Gyeonggi-do (KR); OH, Jinyoung, 16677 Suwon-si, Gyeonggi-do (KR); BANG, Jonghyun, 16677 Suwon-si, Gyeonggi-do (KR); SHIN, Cheolkyu, 16677 Suwon-si, Gyeonggi-do (KR)
(74) Representative: Gulde & Partner

(57) **Abstract**

The disclosure relates to a communication method and system for converging a 5^{th}-Generation (5G) communication system by receiving hybrid automatic repeat request (HARQ) configuration information including HARQ process-related information from a base station, receiving scheduling information for downlink data from the base station, attempting decoding of the downlink data based on the scheduling information, generating HARQ feedback information based on the HARQ process-related information and whether the decoding of the downlink data is successful, and transmitting the HARQ feedback information to the base station in a periodic time resource and frequency resource determined based on the HARQ configuration information.

## Description

### Technical Field

The disclosure relates to a wireless communication system, and particularly relates to a method and apparatus for performing feedback for data transmission by a terminal. In addition, the disclosure relates to a method which, in the case of attempting to transmit or receive hybrid automatic repeat request (HARQ)-acknowledge (ACK) information, determines the timing of transmission of HARQ-ACK feedback and configures bits of HARQ-ACK information actually transmitted or received. In addition, the disclosure may be applied to the case where HARQ-ACK information for data transmitted or received via downlink is transmitted or received via uplink, the case where HARQ-ACK information for data transmitted or received via uplink is transmitted or received via downlink, or the case where HARQ-ACK information is transmitted or received between terminals via sidelink in a cellular system.

### Background Art

To meet the demand for wireless data traffic having increased since deployment of 4^{th} Generation (4G) communication systems, efforts have been made to develop an improved 5^{th} Generation (5G) or pre-5G communication system. Therefore, the 5G or pre-5G communication system is also called a 'Beyond 4G Network' or a 'Post long term evolution (LTE) System'. The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems. In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like. In the 5G system, Hybrid Frequency-Shift Keying (FSK) and Quadrature Amplitude Modulation (QAM) (FQAM) and sliding window superposition coding (SWSC) as an advanced coding modulation (ACM), and filter bank multi carrier (FBMC), non-orthogonal multiple access (NOMA), and sparse code multiple access (SCMA) as an advanced access technology have been developed.

The Internet, which is a human centered connectivity network where humans generate and consume information, is now evolving to the Internet of Things (IoT) where distributed entities, such as things, exchange and process information without human intervention. The Internet of Everything (IoE), which is a combination of the loT technology and the Big Data processing technology through connection with a cloud server, has emerged. As technology elements, such as "sensing technology", "wired/wireless communication and network infrastructure", "service interface technology", and "Security technology" have been demanded for loT implementation, a sensor network, a Machine-to-Machine (M2M) communication, Machine Type Communication (MTC), and so forth have been recently researched. Such an loT environment may provide intelligent Internet technology services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing Information Technology (IT) and various industrial applications.

In line with this, various attempts have been made to apply 5G communication systems to loT networks. For example, technologies such as a sensor network, Machine Type Communication (MTC), and Machine-to-Machine (M2M) communication may be implemented by beamforming, MIMO, and array antennas. Application of a cloud Radio Access Network (RAN) as the above-described Big Data processing technology may also be considered to be as an example of convergence between the 5G technology and the loT technology.

Meanwhile, a new radio access technology (NR), which is new 5G communication, is designed to allow various services to be freely multiplexed in time and frequency resources. Accordingly, waveforms/numerologies, reference signals, and the like may be dynamically or freely allocated according to the needs of the corresponding service. In order to provide an optimal service to a terminal in wireless communication, the channel quality and optimized data transmission through measurement of an interference amount are important, and accordingly accurate channel state measurement is necessary. However, unlike 4G communication, in which channel and interference characteristics do not change greatly according to frequency resources, the channel and interference characteristics of a 5G channel change significantly depending on the service, which makes it necessary to support a subset of a frequency resource group (FRG) that enables separate measurements thereof. Meanwhile, services being supported in the NR system are categorized into enhanced mobile broadband (eMBB), massive machine type communications (mMTC), and ultra-reliable and low-latency communications (URLLC). The eMBB is a service aiming at high-speed data transmission of high capacity data, the mMTC is a service aiming at minimizing the power consumption of the terminal and supporting access by multiple terminals, and URLLC is a service aiming at high reliability and low latency. Different requirements may be applied depending on the type of service applied to the terminal.

As such, a plurality of services may be provided to a user in a communication system, and in order to provide the plurality of services to a user, there is a need of a method for providing different services within the same time period in order to meet the service-specific requirements and an apparatus using the same.

In a wireless communication system, particularly, in a new radio (NR) system, a receiving terminal receives data according to data transmission from a transmitting terminal to the receiving terminal, and then transmits HARQ-ACK feedback information pertaining to the corresponding data to the transmitting terminal. For example, in downlink data transmission, a terminal transmits, in a configured resource, HARQ-ACK feedback information for data transmitted from the base station, to a base station. In the case where HARQ-ACK feedback is transmitted every time data is received, the terminal may consume significant amount of power for feedback transmission. In addition, in order to reduce the frequency of feedback transmission by adjusting HARQ-ACK feedback timing in all data scheduling, the number of bits of control information for indicating timing information may always be required, which may generate an overhead of control information. Therefore, a method for performing HARQ-ACK feedback information transmission may be needed only in the case in which there is a need for a base station or a transmitting terminal.

The above information is presented as background information only, and to assist with an understanding of the disclosure. No determination has been made, and no assertion is made, as to whether any of the above might be applicable as prior art with regard to the disclosure.

### Disclosure of Invention

### Technical Problem

Aspects of the disclosure are to address at least the above-mentioned problems and/or disadvantages and to provide at least the advantages described below. Accordingly, an aspect of the disclosure is to provide a method and apparatus for periodically allocating and transmitting a HARQ-ACK feedback resource for transmission or reception of HARQ-ACK feedback information or for indicating HARQ-ACK feedback by a base station or a transmitting terminal.

Additional aspects will be set forth in part in the description which follows and, in part, will be apparent from the description, or may be learned by practice of the presented embodiments.

### Solution to Problem

In accordance with an aspect of the disclosure, an operation method of a terminal is provided. The method includes receiving hybrid automatic repeat request (HARQ) configuration information including HARQ process-related information from a base station, receiving scheduling information for downlink data from the base station, attempting decoding of the downlink data based on the scheduling information, generating HARQ feedback information based on the HARQ process-related information and whether the decoding of the downlink data is successful, and transmitting the HARQ feedback information to the base station in a periodic time resource and frequency resource determined based on the HARQ configuration information.

In accordance with another aspect of the disclosure, an operation method of a base station is provided. The operation method includes transmitting hybrid automatic repeat request (HARQ) configuration information including HARQ process-related information to a terminal, transmitting scheduling information for downlink data to the terminal, transmitting the downlink data to the terminal, based on the scheduling information, and receiving HARQ feedback information from the terminal in a periodic time resource and frequency resource determined based on the HARQ configuration information, wherein the HARQ feedback information is generated based on the HARQ process-related information and whether the decoding of the downlink data is successful.

In accordance with another aspect of the disclosure, a terminal is provided. The terminal includes a transceiver unit, and a controller configured to receive hybrid automatic repeat request (HARQ) configuration information including HARQ process-related information from a base station, receive scheduling information for downlink data from the base station, attempt decoding of the downlink data based on the scheduling information, generate HARQ feedback information based on the HARQ process-related information and whether the decoding of the downlink data is successful, and transmit the HARQ feedback information to the base station in a periodic time resource and frequency resource determined based on the HARQ configuration information.

In accordance with another aspect of the disclosure, a base station is provided. The base station includes a transceiver unit, and a controller configured to transmit hybrid automatic repeat request (HARQ) configuration information including HARQ process-related information to a terminal, transmit scheduling information for downlink data to the terminal, transmit the downlink data to the terminal based on the scheduling information, and receive HARQ feedback information from the terminal in a periodic time resource and frequency resource determined based on the HARQ configuration information, wherein the HARQ feedback information is generated based on the HARQ process-related information and whether the decoding of the downlink data is successful.

### Advantageous Effects of Invention

In accordance with another aspect of the disclosure, a method for transmission or reception of HARQ-ACK feedback may be provided.

In accordance with another aspect of the disclosure, a base station may configure a feedback period of a terminal or indicate aperiodic transmission of feedback information to the terminal.

In accordance with another aspect of the disclosure, a new method for generation of feedback information may be provided.

In accordance with another aspect of the disclosure, it is possible to reduce the amount of resources used for transmission or reception of HARQ-ACK feedback information or to reduce the size of scheduling control information.

Other aspects, advantages, and salient features of the disclosure will become apparent to those skilled in the art from the following detailed description, which, taken in conjunction with the annexed drawings, discloses various embodiments of the disclosure.

### Brief Description of Drawings

The above and other aspects, features, and advantages of certain embodiments of the disclosure will be more apparent from the following description taken in conjunction with the accompanying drawings, in which:
FIG. 1 illustrates a downlink or uplink time-frequency domain transmission structure in a new radio system according to an embodiment of the disclosure;
FIG. 2 illustrates a configuration in which pieces of data for eMBB, URLLC, and mMTC are allocated in a frequency-time resource in a communication system according to an embodiment of the disclosure;
FIG. 3 illustrates a configuration in which pieces of data for eMBB, URLLC, and mMTC are allocated in a frequency-time resource in a communication system according to an embodiment of the disclosure;
FIG. 4 illustrates an example of a process in which a transport block is added with a cyclic redundancy check (CRC) and divided into code blocks in an NR system according to an embodiment of the disclosure;
FIG. 5 illustrates an example in which a resource for periodic HARQ-ACK feedback transmission is configured according to an embodiment of the disclosure;
FIG. 6 illustrates an example of a periodic HARQ-ACK feedback transmission method according to periodic data transmission according to an embodiment of the disclosure;
FIG. 7 illustrates an example of determining whether to perform HARQ-ACK feedback transmission according to whether data transmission is performed in a periodically configured resource for HARQ-ACK feedback transmission according to an embodiment of the disclosure;
FIG. 8 illustrates an example of determining whether to perform HARQ-ACK feedback transmission, always in a periodically configured resource for HARQ-ACK feedback transmission, according to an embodiment of the disclosure;
FIG. 9 is a flowchart that illustrates an operation of a terminal and a base station according to an embodiment of the disclosure;
FIG. 10 is another flowchart that illustrates an operation of a terminal and a base station according to an embodiment of the disclosure;
FIG. 11 is a block diagram that illustrates a configuration of a terminal according to an embodiment of the disclosure; and
FIG. 12 is a block diagram that illustrates a configuration of a base station according to an embodiment of the disclosure.

Throughout the drawings, like reference numerals will be understood to refer to like parts, components, and structures.

### Mode for the Invention

The following description with reference to the accompanying drawings is provided to assist in a comprehensive understanding of various embodiments of the disclosure as defined by the claims and their equivalents. It includes various specific details to assist in that understanding, but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but are merely used to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a""an"and "the"include plural referents unless the context clearly dictates otherwise. Thus, for example, reference to "a component surface" includes reference to one or more of such surfaces.

In describing the embodiments of the disclosure, descriptions related to technical contents which are well-known in the art to which the disclosure pertains, and are not directly associated with the disclosure, will be omitted. Such omission of unnecessary descriptions is intended to prevent obscuring of the main idea of the disclosure in order to more clearly convey the main idea.

For the same reason, in the accompanying drawings, some elements may be exaggerated, omitted, or schematically illustrated. Further, the size of each element does not entirely reflect the actual size. In the drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements.

Here, it will be understood that each block in the flowchart illustrations and combinations of blocks in the flowchart illustrations can be implemented by computer program instructions. These computer program instructions can be provided to a processor of a general-purpose computer, special-purpose computer, or other programmable data processing apparatus to produce a machine such that the instructions executed via the processor of the computer or other programmable data processing apparatus, generate means for implementing the functions specified in the flowchart block or blocks. These computer program instructions may also be stored in a computer-usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operations to be performed on the computer or other programmable apparatus to produce a computer-implemented process such that the instructions that execute on the computer or other programmable apparatus provide operations for implementing the functions specified in the flowchart block or blocks.

Additionally, each block of the flowchart illustrations may represent a module, segment, or portion of code that includes one or more executable instructions for implementing the specified logical function(s). It should also be noted that in some alternative implementations, the functions noted in the blocks may occur out of the order shown. For example, two blocks shown in succession may in fact be executed substantially concurrently or the blocks may sometimes be executed in the reverse order, depending upon the functionality involved.

As used herein, the "unit" refers to a software element or a hardware element, such as a Field Programmable Gate Array (FPGA) or an Application Specific Integrated Circuit (ASIC), which performs a predetermined function. However, "unit" does not always have a meaning limited to software or hardware. The "unit" may be constructed either to be stored in an addressable storage medium or to be executed on one or more processors. Therefore, the "unit" includes, for example, software elements, object-oriented software elements, class elements or task elements, processes, functions, properties, procedures, sub-routines, segments of program code, drivers, firmware, micro-codes, circuits, data, databases, data structures, tables, arrays, and parameters. The elements and functions provided by the "unit" may be either combined into a smaller number of elements, "units" or divided into a larger number of elements or "units". Moreover, the elements or "units" may be implemented to be reproduced on one or more CPUs within a device or a security multimedia card. Also, in an embodiment, the "unit" may include one or more processors.

A wireless communication system has developed into a broadband wireless communication system that provides high-speed and high-quality packet data service according to the communication standards such as High-Speed Packet Access (HSPA) of 3rd Generation Partnership Project (3GPP), Long-Term Evolution (LTE) or evolved universal terrestrial radio access (E-UTRA), LTE-advanced (LTE-A), High Rate Packet Data (HRPD) of 3GPP2, Ultra Mobile Broadband (UMB), and 802.16e of IEEE, or the like, beyond the voice-based service provided initially. Also, a communication standard of 5G or new radio (NR) is being developed as a 5G wireless communication system.

The NR system, as a representative example of the broadband wireless communication system, employs an orthogonal frequency-division multiplexing (OFDM) scheme in the downlink (DL) and in the uplink (UL). More specifically, the NR system uses a cyclic-prefix OFDM (CP-OFDM) scheme in the downlink (DL) and a discrete Fourier transform spreading OFDM (DFT-S-OFDM) scheme together with the CP-OFDM in the uplink (UL). The term "uplink" denotes a radio link for transmitting data or control signals from a terminal (a user equipment (UE) or a mobile station (MS)) to a base station (gNode B or BS), and the term "downlink" denotes a radio link for transmitting data or control signals from a base station to a terminal. In the multiple access schemes described above, time-frequency resources for carrying data or control information are allocated and operated in a manner to prevent overlapping of the resources, i.e. to establish orthogonality between users so as to identify data or control information of each user.

If decoding failure occurs in the initial transmission, the NR system employs hybrid automatic repeat request (HARQ) scheme for retransmitting the corresponding data in a physical layer. A HARQ scheme is designed to operate in such a way that if a receiver fails to accurately decode data, the receiver transmits information, that is, a negative acknowledgement (NACK), indicative of the decoding failure, thus enabling the transmitter to retransmit the corresponding data in the physical layer. The receiver may combine data retransmitted from the transmitter and previous data, decoding of which fails, whereby data reception performance may increase. Also, if the receiver accurately decodes data, the receiver transmits information (ACK) reporting that decoding is successfully executed, so that the transmitter transmits new data.

In the following description of the disclosure, a detailed description of known functions or configurations incorporated herein will be omitted when the same may make the subject matter of the disclosure rather unclear. The terms that will be used below are terms defined in consideration of the functions in the disclosure, and may differ according to users, intentions of the users, or customs. Therefore, the definitions of the terms should be made based on the contents throughout the specification.

Hereinafter, the base station is a subject for allocating resources to a terminal, and may be at least one of a gNode B (gNB), an eNode B (eNB), a Node B, a base station (BS), a radio access unit, a base station controller including at least one processor, or a node on a network. The terminal may include a user equipment (UE), a mobile station (MS), a cellular phone, a smart phone, a computer, or a multimedia system capable of performing a communication function. In the disclosure, downlink (DL) refers to a radio transmission path of a signal transmitted to a terminal by a base station, and uplink (UL) refers to a radio transmission path of a signal transmitted to a base station by a terminal. In addition, an embodiment is described below using an NR system as an example, but an embodiment may be applied to other communication systems having a similar technical background or a similar channel form. Also, embodiments may be modified without departing from the scope of the disclosure, and may be applied to other communication systems based on a determination by those skilled in the art.

In the disclosure, the terms "physical channel" and "signal" may be used interchangeably with "data" or "control signal". For example, a PDSCH is a physical channel through which data is transmitted, but in the disclosure, the PDSCH may be referred to as data.

Hereinafter, in the embodiment, higher layer signaling is a method for transmitting, by a base station, a signal to a terminal by using a downlink data channel of a physical layer or a method for transmitting, by a terminal, a signal to a base station by using an uplink data channel of a physical layer. The higher layer signaling may also be referred to as radio resource control (RRC) signaling or medium access control (MAC) control element (CE).

The following embodiment provides a method and apparatus for transmitting HARQ-ACK feedback to a base station by a terminal, or a method and apparatus for transmitting HARQ-ACK feedback to a node for data transmission by a node for data reception. In an embodiment, "HARQ-ACK feedback" may be used interchangeably used with a "HARQ feedback", "feedback information", and the like.

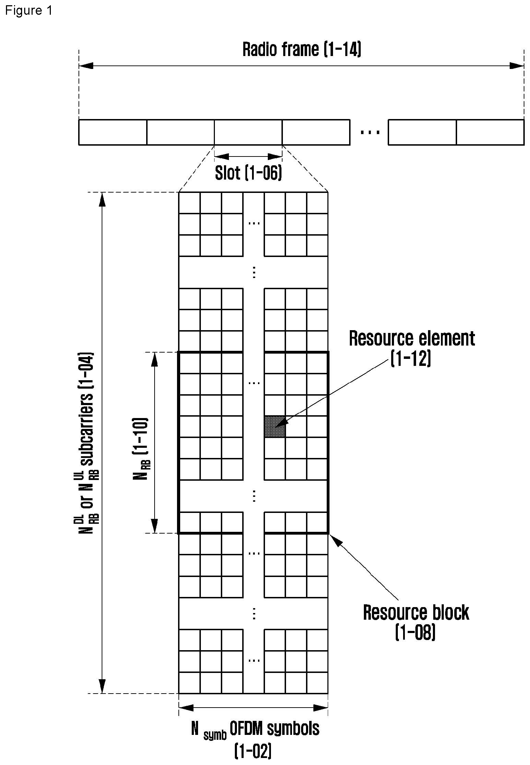

FIG. 1 illustrates a basic structure of a time-frequency domain, which is a radio resource region in which data or a control channel is transmitted in the downlink or the uplink in an NR system, according to an embodiment of the disclosure.

Referring to FIG. 1, a horizontal axis indicates a time domain, and a vertical axis indicates a frequency domain. The minimum transmission unit in the time domain is an OFDM symbol, and *N_{symb}* OFDM symbols 1-02 are gathered to configure one slot 1-06. The length of a subframe is defined as 1.0 ms, and a radio frame 1-14 is defined as 10 ms. The minimum transmission unit in the frequency domain is a subcarrier, and the bandwidth of the entire system transmission band is configured by a total of *N_{BW}* subcarriers 1-04.

In the time-frequency domain, the basic resource unit is a resource element (RE) 1-12, and an RE is expressed by an OFDM symbol index and a subcarrier index. A resource block (RB) 1-08 (or physical resource block (PRB)) is defined by N_{symb} consecutive OFDM symbols 1-02 in the time domain and N_{RB} consecutive subcarriers 1-10 in the frequency domain. Therefore, one RB 1-08 is configured by N_{symb} x N_{RB} REs 1-12. Generally, the minimum transmission unit of data is an RB unit. In the NR system, N_{symb} = 14, N_{RB} = 12, and New and N_{RB} are proportional to the bandwidth of the system transmission band. The data rate may increase in proportion to the number of RBs scheduled for the terminal. In the NR system, in the case of a frequency division duplexing (FDD) system in which downlink and uplink are divided into frequencies, the downlink transmission bandwidth and the uplink transmission bandwidth may be different from each other. The channel bandwidth indicates an RF bandwidth corresponding to the system transmission bandwidth. Table 1-01 and Table 1-02 show part of a correspondence relationship between a system transmission bandwidth, a subcarrier spacing, and a channel bandwidth defined in the NR system at a frequency bandwidth below 6 GHz and at a frequency bandwidth above 6 GHz, respectively. For example, in the NR system which has a 100 MHz channel bandwidth with a 30 kHz subcarrier spacing, the transmission bandwidth is configured by 273 RBs. In the following, N/A may be a combination of a bandwidth and a subcarrier, which is not supported by the NR system.

**Table 1-01**

| **Channel bandwidth BW_{channel} [MHz]** | **Subcarrier spacing** | **5** | **10** | **20** | **50** | **80** | **100** |
|---|---|---|---|---|---|---|---|
| Transmission bandwidth configuration N_{RB} | 15 kHz | 25 | 52 | 106 | 270 | N/A | N/A |
| | 30 kHz | 11 | 24 | 51 | 133 | 217 | 273 |
| | 60 kHz | N/A | 11 | 24 | 65 | 107 | 135 |

**Table 1-02**

| **Channel bandwidth BW_{Channel} [MHz]** | **Subcarrier spacing** | **50** | **100** | **20** | **50** |
|---|---|---|---|---|---|
| Transmission bandwidth configuration N_{RB} | 60 kHz | 66 | 132 | 264 | N/A |
| | 120 kHz | 32 | 66 | 132 | 264 |

In the NR system, scheduling information for downlink data or uplink data may be transmitted from a base station to a terminal via downlink control information (DCI). The DCI is defined in various formats, and according to each format, the DCI may indicate whether it is scheduling information (UL grant) for uplink data or scheduling information (DL grant) for downlink data, whether it is a compact DCI having a small amount of control information, whether or not spatial multiplexing using multiple antennas is applied, or whether or not DCI for power control is applied. For example, DCI format 1-1, which is scheduling control information (DL grant) for downlink data, may include at least one of the following pieces of control information.
- Carrier indicator: Carrier indicator indicates a carrier frequency at which transmission is performed.
- DCI format indicator: DCI format indicator indicates whether the corresponding DCI is for downlink or for uplink.
- Bandwidth part (BWP) indicator: BWP indicator indicates the BWP in which transmission is performed.
- Frequency domain resource assignment: Frequency domain resource assignment indicates the RB of the frequency domain, which is allocated for data transmission. A resource is determined according to the system bandwidth and resource allocation scheme.
- Time domain resource assignment: Time domain resource assignment indicates a slot and an OFDM symbol of the slot, in which a data-related channel is to be transmitted.
- VRB-to-PRB mapping: VRB-to-PRB mapping indicates a mapping scheme by which a virtual RB (VRB) index is mapped to a physical RB (PRB) index.
- Modulation and coding scheme (MCS): MCS indicates a modulation scheme used for data transmission and the size of a transport block of data to be transmitted.
- HARQ process number: HARQ process number indicates a process number of HARQ.
- New data indicator: New data indicator indicates whether HARQ transmission is initial transmission or retransmission.
- Redundancy version: Redundancy version indicates the redundancy version of HARQ.
- Transmit power control (TPC) command for physical uplink control channel (PUCCH): TPC command for PUCCH indicates a TPC command for the PUCCH serving as an uplink control channel.

In the case of physical uplink shared channel (PUSCH) transmission, time domain resource assignment may be performed via information about a slot in which a PUSCH is transmitted, a start symbol position S in the corresponding slot, and the number L of symbols to which the PUSCH is mapped. In the above, S may be a relative position from the start of a slot, L may be the number of consecutive symbols, and S and L may be determined based on a start and length indicator value (SLIV) defined as follows.

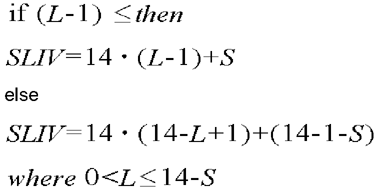

Generally, the NR system may receive, through radio resource control (RRC) configuration, configuration of a table in which an SLIV value, a PUSCH mapping type, and information on a slot in which a PUSCH is transmitted are included in one row. Subsequently, in the time domain resource assignment of the DCI, by indicating an index value in the table configured as above, a base station may transmit, to a terminal, the SLIV value, the PUSCH mapping type, and information on the slot in which the PUSCH is transmitted.

In the NR system, the PUSCH mapping type is defined by type A and type B. In the PUSCH mapping type A, the first symbol among DMRS symbols is located at the second or the third OFDM symbol in a slot. In the PUSCH mapping type B, the first symbol of DMRS symbol is located at the first OFDM symbol in a time domain resource assigned via PUSCH transmission.

The DCI may be subjected to a channel coding and modulation process, and may then be transmitted through a physical downlink control channel (PDCCH) (or "control information", hereinafter used interchangeably), which is a downlink physical control channel.

Generally, the DCI is scrambled with a specific radio network temporary identifier (RNTI) (or a terminal identifier), independently for each terminal, a cyclic redundancy check (CRC) is added thereto, and channel coding is performed, whereby each independent PDCCH is configured and transmitted. The PDCCH is mapped and transmitted in a control resource set (CORESET) configured for the terminal.

The downlink data may be transmitted through a physical downlink shared channel (PDSCH) serving as a physical channel for downlink data transmission. The PDSCH may be transmitted after a control channel transmission interval, and scheduling information such as a specific mapping position and modulation scheme in the frequency domain is determined based on DCI transmitted through the PDCCH.

Via an MCS in the control information included in the DCI, a base station may report the modulation scheme applied to a PDSCH to be transmitted to a terminal, and the size (transport block size (TBS)) of data to be transmitted. In an embodiment, the MCS may be configured of 5 bits or more or fewer bits. The TBS corresponds to a size before channel coding for error correction is applied to data (transport block, TB) to be transmitted by a base station.

In an embodiment, a transport block (TB) may include a medium access control (MAC) header, a MAC control element (CE), one or more MAC service data units (SDUs), and padding bits. Alternatively, the TB may indicate the unit of data, which is dropped from a MAC layer to a physical layer, or a MAC protocol data unit (MAP PDU).

The modulation scheme supported by the NR system are quadrature phase shift keying (QPSK), 16 quadrature amplitude modulation (16 QAM), 64 QAM, and 256 QAM. Modulation orders (Qm) of the QPSK, 16 QAM, 64 QAM, and 256 QAM correspond to 2, 4, 6, and 8, respectively. That is, 2 bits per symbol in the case of QPSK modulation, 4 bits per symbol in the case of 16 QAM modulation, 6 bits per symbol in the case of 64 QAM modulation, and 8 bits per symbol in the case of 256 QAM modulation may be transmitted.

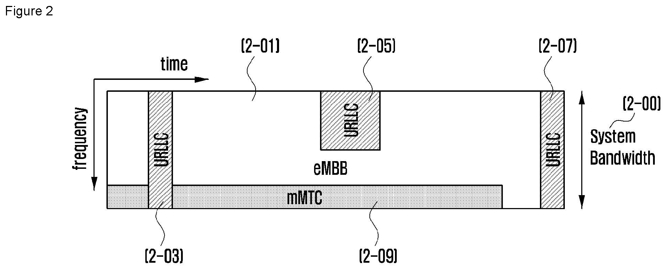

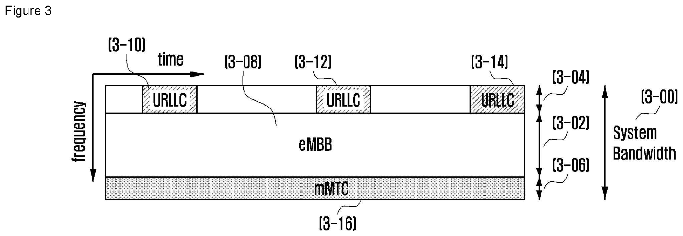

FIG. 2 illustrates a configuration in which pieces of data for eMBB, URLLC, and mMTC, which are services considered in the 5G or NR system, are allocated in frequency-time resources according to an embodiment of the disclosure. FIG. 3 illustrates a configuration in which pieces of data for eMBB, URLLC, and mMTC, which are services considered in the 5G or NR system, are allocated in frequency-time resources according to an embodiment of the disclosure.

Referring to FIGS. 2 and 3, there may be presented a scheme in which frequency and time resources are allocated for performing information transmission in each system.

First, FIG. 2 illustrates a configuration in which pieces of data for eMBB, URLLC, and mMTC are allocated in the entire system frequency bandwidth 2-00. In the middle of allocation and transmission of eMBB 2-01 and mMTC 2-09 in a specific frequency bandwidth, if URLLC data 2-03, 2-05, and 2-07 occur and transmission thereof is thus necessary, the URLLC data 2-03, 2-05, and 2-07 may be transmitted without emptying the portion in which the eMBB 2- 01 and the mMTC 2-09 have been already allocated and without transmitting the same. Since the URLLC needs to reduce a delay time in the middle of service, URLLC data 2-03, 2-05, and 2-07 may be allocated to a portion of the resource 2-01 to which the eMBB is allocated, and thus may be transmitted. Of course, in the case where URLLC is additionally allocated and transmitted in the resource to which the eMBB is allocated, eMBB data may not be transmitted in an overlapping frequency-time resource, and thus the transmission performance of the eMBB data may be lowered. That is, in the above case, eMBB data transmission failure due to URLLC allocation may occur.

In FIG. 3, the entire system frequency bandwidth 3-00 may be divided into sub-bands 3-02, 3-04, and 3-06 and used for transmission of a service and data therein. Information associated with the sub-band configuration may be predetermined, and the information may be transmitted to a terminal by a base station via higher layer signaling. Alternatively, the information associated with the sub-bands may be arbitrarily divided by a base station or a network node and provide services to the terminal without transmitting separate sub-band configuration information. FIG. 3 illustrates that the sub-band 3-02 is used for eMBB data transmission 3-08, the sub-band 3-04 is used for URLLC data transmission 3-10, 3-12, 3-14, and the sub-band 3-06 is used for mMTC data transmission 3-16.

Throughout the embodiment, the length of a transmission time interval (TTI) used for URLLC transmission may be shorter than the length of TTI used for eMBB or mMTC transmission. In addition, the response of information related to the URLLC may be transmitted faster than that of eMBB or mMTC, and accordingly information transmission or reception with a low delay is possible. The structures of physical layer channels used for transmission of the three types of services or data may be different from each other. For example, at least one of the length of a transmission time interval (TTI), the allocation unit of frequency resources, a structure of a control channel, and a data mapping method may be different.

In the above description, three types of services and three types of data are described, but an even greater number of types of services and data corresponding thereto may exist, in which case the contents of the disclosure may be applied.

In order to explain a method and apparatus proposed in the embodiment, the terms "physical channel" and "signal", pertaining to the NR system may be used. However, details of the embodiment may be applied to a wireless communication system other than the NR system.

### First Embodiment

A first embodiment provides a method for, in order to transmit HARQ-ACK to a base station, receiving a relevant configuration from a base station, and periodically transmitting the HARQ-ACK to the base station according to configuration information from the base station, by a terminal. For example, the method provided in the embodiment may be a method for transmitting, by a terminal, HARQ-ACK information to a base station at a predetermined specific time point even if the terminal does not receive a PDSCH because the terminal does not receive scheduling information for the PDSCH. In the case where the method described in the disclosure is applied to a sidelink, it may be changed and applied to the case where the base station is a vehicle-mounted terminal. In the case where the method provided by the disclosure is applied to the sidelink, reception data may be transmitted through a physical sidelink shared channel (PSSCH), and control information may be transmitted through a physical sidelink control channel (PSCCH). The control information may be referred to as sidelink control information (SCI). In the sidelink, feedback information may be transmitted through a physical sidelink feedback channel (PSFCH), and the feedback information may be referred to as sidelink feedback control information (SFCI).

The periodic feedback transmission provided by the embodiment may be used as a method for reducing power consumption of a terminal by performing feedback transmission at every predetermined period rather than performing feedback transmission at every time data reception is performed.

A base station transmits a PDSCH in order to transmit data to a terminal. In order to transmit the PDSCH, the base station may first transmit a PDCCH for transmission of DCI including scheduling control information to a terminal, or may transmit scheduling information in advance via higher layer signaling and activate or deactivate periodic PDSCH transmission through the PDCCH. In order to activate or deactivate the periodic or semi-persistent PDSCH transmission, the base station may transmit activation information or deactivation information to the terminal by configuring, to specific values, values of specific bit fields of DCI transmitted through the PDCCH.

The terminal receives the PDSCH and decodes a transport block (TB) to be transmitted through the PDSCH. The PDSCH may include one or two TBs. The terminal may decode each TB by using an MCS of scheduling information configured via DCI or higher layer signaling and information such as resource allocation information. In addition, each TB may include one or more code blocks (CBs), and the code blocks may be a unit for performing channel coding and decoding. The terminal may determine whether decoding of each code block is successful by checking CRC while decoding the code blocks, and may determine whether decoding of all the TBs is successful by checking CRCs included in the TBs. If the code block CRC is not included in the above determination, the terminal may determine whether decoding of the code block is successful or whether TB decoding is successful by using the TB CRC.

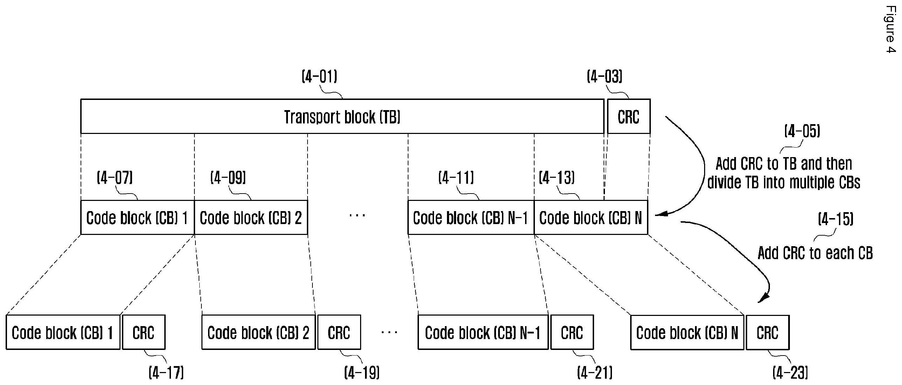

FIG. 4 illustrates a process in which one transport block is divided into several code blocks and a CRC is added thereto according to an embodiment of the disclosure.

Referring to FIG. 4, a CRC 4-03 may be added to the end or the beginning of one transport block (TB) 4-01 to be transmitted in an uplink or a downlink. The CRC may have 16 bits, 24 bits, or a fixed number of bits, or may have a variable number of bits depending on channel conditions, and may be used to determine whether channel coding is successful. The TB 4-01 and CRC-added block 4-03 may be divided into several code blocks (CBs) 4-07, 4-09, 4-11, and 4-13 (indicated by reference numeral 4-05). The divided code blocks may have a predetermined maximum size, in which case the last code block 4-13 may be smaller in size than those of the other code blocks, or may have a length adjusted to be the same as that of the other code blocks by adding zeros, random values, or ones into the same. CRCs 4-17, 4-19, 4-21, and 4-23 may be added to the divided code blocks, respectively (indicated by reference numeral 4-15). The CRC may have 16 bits, 24 bits, or a fixed number of bits, and may be used to determine whether channel coding is successful. However, the CRC 4-03 added to the TB and CRCs 4-17, 4-19, 4-21, and 4-23 added to the code blocks may be omitted depending on the type of channel code to be applied to the code block. In the case where the LDPC is applied, the CRCs 4-17, 4-19, 4-21, and 4-23 may be added to the code block without change.

In the disclosure, the terms "CB group unit retransmission", "CBG unit retransmission", "partial retransmission", and "CBG retransmission" may be used interchangeably. The configured number of CBGs or the configured maximum number of CBGs for a terminal, the configuration received from a base station, is defined as N_{CBG,max}. N_{CBG,max} may be used interchangeably with NCBG,max. The number of CBs included in the scheduled TB is defined as C. In the case where the TB is scheduled, the actual number of CBGs "M" may be determined to be M = min (NCBG,max, C), and min (x, y) may denote the smaller value among x and y. CBs of C included in the TB may be grouped according to the following rules in order to configure M CBGs.
- First mod (C, M) CBGs each include ceil (C/M) or ${\left⌈C/M\right⌉}_{CBs}$.
- Last M-mod (C, M) CBGs each include floor (C/M) or ${\left⌊C/M\right⌋}_{CBs}$_{.}

Here, ceil (C/M) or $\left⌈C/M\right⌉$ denotes the smallest integer greater than or equal to C/M, and floor (C/M) or $\left⌈C/M\right⌉$ denotes the greatest integer less than or equal to C/M. For example, if C/M is 4.3, ceil (C/M) is 5, and floor (C/M) is 4. According to the above rules, CBs are grouped sequentially from the front CBG.

As described above, if the maximum number of CBGs configured for a terminal is N_{CBG,max}, downlink control information (DCI) transmitted to schedule CBG unit retransmission may be configured to include N_{CBG,max} bits for CBG transmission information (CBGTI). The CBGTI may be an indicator indicating which CBGs are being transmitted in current scheduling. For example, if the base station configures N_{CBG,max}=4 for the terminal, one TB may include maximum 4 CBGs, DCI may include 4 bits to indicate CBGTI, and each bit may indicate information about whether each CBG is transmitted. For example, if DCI includes bits of 1111 and there are four CBGs, each bit is 1 and thus all CBGs may be transmitted. As another example, if DCI includes bits of 1100 and there are four CBGs, only the first and second CBGs may be transmitted.

In the medium access control (MAC) protocol, a transport block (TB) received in the physical layer is allocated to a corresponding HARQ process. In the case where a receiving terminal has received the TB and scheduling information, if a new data indicator (NDI) of the corresponding HARQ process is toggled (i.e., the NDI has a value different from that of a previously received NDI), if the transmission is broadcast transmission, or if the corresponding TB is transmitted first, the transmission is considered as new transmission, otherwise it is considered retransmission.

The base station may notify a terminal of relevant configuration information via higher layer signaling in order for the terminal to transmit, to the base station, HARQ-ACK information of the PDSCH to be transmitted to the downlink. The HARQ-ACK information of the PDSCH may be HARQ-ACK information in units of TBs included in the PDSCH, or may be HARQ-ACK information in units of CBG in the case where CBG unit retransmission and feedback are configured. In the disclosure, the "higher layer signaling" may be a MAC control element (MAC CE) or an RRC configuration. The relevant configuration information may include at least one of the following pieces of information.
- HARQ process IDs for transmission of HARQ-ACK information
- Number of HARQ processes for transmission of HARQ-ACK information
- Time period in which HARQ-ACK information is to be transmitted
- Offset of time in which HARQ-ACK information is to be transmitted
- Format, and frequency and time resources of PUCCH for transmission of HARQ-ACK Information
- Information on whether HARQ-ACK information is expressed in TB units or a CBG units
- If HARQ-ACK information is expressed in CBG units, information on the maximum number of CBGs per TB or the number of CBGs per TB, or information on the number of HARQ-ACK bits per TB

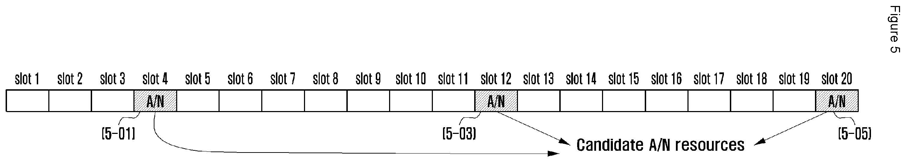

FIG. 5 illustrates a configuration in which a terminal receives allocation of a resource capable of transmitting HARQ-ACK feedback information according to an embodiment of the disclosure.

Referring to FIG. 5, it may be identified that resources 5-01, 5-03, and 5-05 capable of transmitting HARQ-ACK feedback may be periodically available. The resources 5-01, 5-03, and 5-05 may be determined by assigning a period and an offset for feedback transmission. The terminal may transmit HARQ-ACK feedback in resources 5-01, 5-03, and 5-05 capable of transmitting HARQ-ACK feedback, based on operations 1 and 2 as described below.
- Operation 1: Operation 1 is an operation of configuring HARQ-ACK bit. The terminal configures a HARQ-ACK codebook. In operation 1, the terminal determines HARQ-ACK feedback information to be configured. With respect to a HARQ process, the configuration of which is received from the base station, the terminal configures the latest HARQ ACK or NACK information for the HARQ process as HARQ-ACK feedback bit. For example, configuration is made such that the HARQ processes 1 to 8 are periodically fed back to the terminal, and in the case where each transmission is 1 TB transmission, HARQ-ACK feedback information of the latest TB corresponding to the HARQ process is configured as 1 bit per HARQ process. For example, if the latest received TB corresponding to HARQ process k is successfully decoded, the HARQ-ACK feedback information is configured as 1, and if decoding of the corresponding TB has failed, the HARQ-ACK feedback information is configured as 0. The terminal may identify whether decoding of the TB is successful by checking the CRC added to the TB. The terminal may determine the size of the HARQ-ACK feedback codebook (the number of bits) according to the number of HARQ processes configured to perform feedback transmission and the number of TBs corresponding to the HARQ process.

Operation 2: The terminal determines a PUCCH, PUSCH, other control channel, a data channel, and a resource for transmission of the HARQ-ACK feedback bit, which is configured in operation 1, and transmits a relevant physical channel in the corresponding resource. In operation 2, the terminal may receive scheduling information for data, and may apply a method for performing transmission only in the case where a HARQ-ACK feedback bit exists or a method for always transmitting HARQ-ACK feedback bit regardless of whether scheduling information for data is received. In the case where the terminal has not received scheduling information for the data, the terminal may configure the HARQ-ACK feedback bit that needs to be transmitted as 0 and transmit the same. Alternatively, in the case where the terminal has not received the scheduling information for the data, the terminal may configure the HARQ-ACK feedback bit that needs to be transmitted as 1 and transmit the same. In the case where the terminal has not received the scheduling information for the data or fails to receive the scheduling information, the transmitted HARQ-ACK feedback bit may be referred to as virtual feedback information, fake feedback information, dummy feedback information, or the like.

In the above, a method configured to cause HARQ processes to transmit HARQ-ACK feedback may include: a method for configuring the number of HARQ processes (in the case where N HARQ processes are configured, configuration is made to perform feedback transmission through HARQ process 1 to HARQ process N); a method for providing notification of a HARQ process for performing feedback transmission in a bitmap scheme (that is, in the case where a total of K HARQ processes are configured for the terminal or the terminal has the same, configuration is made such that feedback for which HARQ processes is periodically transmitted using K bits); a method for determining the number of HARQ processes for performing HARQ-ACK feedback transmission, using a period configured to transmit HARQ-ACK feedback (for example, in the case where a period for HARQ-ACK feedback transmission is determined to be N slots, the number of HARQ processes for performing HARQ-ACK feedback transmission using the period may be N), and the like. In the case where a total of K HARQ processes are configured for the terminal or the terminal has the same, in the method for configuration of the number of HARQ processes, a ceil (log₂ (K)) bit may be required. In the above, ceil (X) may denote the smallest one among integers greater than or equal to X.

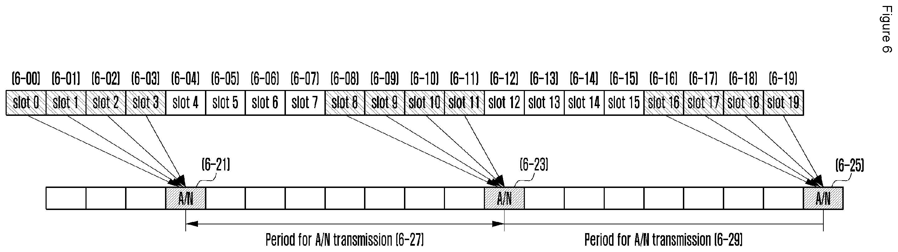

FIG. 6 illustrates an example in which resources for HARQ-ACK feedback are periodically configured and actual transmission is periodically performed in the situation in which data transmission is configured periodically or semi-persistently and data is periodically transmitted according to an embodiment of the disclosure.

Referring to FIG. 6, in order to perform HARQ-ACK feedback transmission to the terminal, resources are periodically configured (indicated by reference numerals 6-21, 6-23, and 6-25) at periods 6-27 and 6-29. Data transmission to the terminal is performed in slot 0 to slot 3 6-00, 6-01, 6-02, and 6-03, and HARQ-ACK feedback for the data from the terminal is transmitted in slot 4 6-21. In addition, after slot 4 to slot 7 6-04, 6-05, 6-06, and 6-07, data transmission to the terminal is performed in slot 8 to slot 11 6-08, 6-09, 6-10, and 6-11, and HARQ-ACK feedback for the data from the terminal is transmitted in slot 12 6-23. In addition, after slot 12 to slot 15 6-12, 6-13, 6-14, and 6-15, data transmission to the terminal is performed in slot 16 to slot 19 6-16, 6-17, 6-18, and 6-19, and HARQ-ACK feedback for the data from the terminal is transmitted in slot 25 6-25. The slot in which the HARQ-ACK feedback is transmitted may be determined based on the processing time capability of the terminal and indication information and configuration information from the base station.

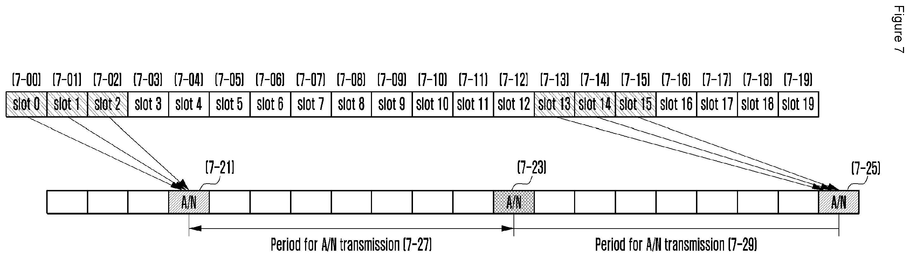

FIG. 7 illustrates an example in which resources for HARQ-ACK feedback are periodically configured and HARQ-ACK transmission is determined depending on whether or not data reception occurs in the situation in which transmitted data is transmitted according to an embodiment of the disclosure.

Referring to FIG. 7, resources for HARQ-ACK feedback transmission are periodically configured for a terminal (indicated by reference numerals 7-21, 7-23, and 7-25) at periods 7-27 and 7-29. HARQ-ACK feedback for data transmitted to the terminal in slot 0 to slot 3 7-00 to 7-03 may be transmitted from the terminal in slot 4 7-21. The actually transmitted HARQ-ACK bit may be determined depending on whether data reception occurs. In addition, HARQ-ACK feedback for data transmitted to the terminal in slot 4 to slot 11 7-04 to 7-11 may be transmitted from the terminal in slot 12 7-23. In FIG. 7, since there is no data transmitted to the terminal or data received by the terminal in slot 4 to slot 11 7-04 to 7-11, there is no HARQ-ACK feedback transmitted by the terminal, and the actual HARQ-ACK feedback transmission from the terminal in slot 12 7-23 is not performed. The actual transmission of the HARQ-ACK feedback 7-23 is determined according to whether or not actual data transmission occurs for data candidates (i.e., data that may be transmitted in slot 4 to slot 11 in the example of FIG. 7) that may have HARQ-ACK that needs to be transmitted in slot 12. For example, in the case where at least one data (PDSCH or PSSCH) is transmitted to the terminal in slot 4 to slot 11, the HARQ-ACK feedback 7-23 may be transmitted from the terminal. In the case where there is no data transmitted to or scheduled for the terminal, the terminal may not transmit HARQ-ACK feedback in order to reduce the power consumption of the terminal. In addition, HARQ-ACK feedback for data transmitted to the terminal in slot 12 to slot 19 7-12 to 7-19 may be transmitted from the terminal in slot 20 7-25. The slot in which the HARQ-ACK feedback is transmitted may be determined based on the processing time capability of the terminal and indication information and configuration information from the base station.

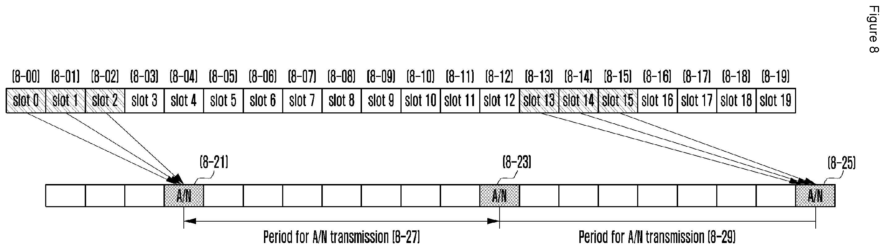

FIG. 8 illustrates an example in which resources for HARQ-ACK feedback are periodically configured and HARQ-ACK feedback is transmitted in a resource configured regardless of whether or not data transmission or data scheduling occurs in a situation where transmitted data are transmitted according to an embodiment of the disclosure.

Referring to FIG. 8, resources for HARQ-ACK feedback transmission are periodically configured for the terminal (indicated by reference numerals 8-21, 8-23, and 8-25) at periods 8-27 and 8-29. HARQ-ACK feedback for data transmitted to the terminal in slot 0 to slot 3 8-00 to 8-03 may be transmitted from the terminal in slot 4 (indicated by reference numeral 8-21). The actually transmitted HARQ-ACK bit is determined according to a transmission period of HARQ-ACK or the configured number of HARQ processes. In addition, HARQ-ACK feedback for data transmitted to the terminal in slot 4 to slot 11 8-04 to 8-11 may be transmitted from the terminal in slot 12 (indicated by reference numeral 8-23). In FIG. 8, since there is no data transmitted to the terminal or data scheduled for the terminal in slot 4 to slot 11 8-04 to 8-11, the terminal configures all HARQ-ACK feedback values to 0 or 1 and performs feedback transmission in slot 12 (indicated by reference numeral 8-23). In addition, HARQ-ACK feedback for data transmitted to the terminal in slot 12 to slot 19 8-12 to 8-19 may be transmitted from the terminal in slot 20 (indicated by reference numeral 8-25). The slot in which the HARQ-ACK feedback is transmitted may be determined based on the processing time capability of the terminal and indication information and configuration information from the base station.

In the embodiment, it has been described that the feedback information is limited to HARQ-ACK. However, in addition to HARQ-ACK information, the feedback information may include feedback information related to channel-state reporting, and may be applied to other types of feedback transmission.

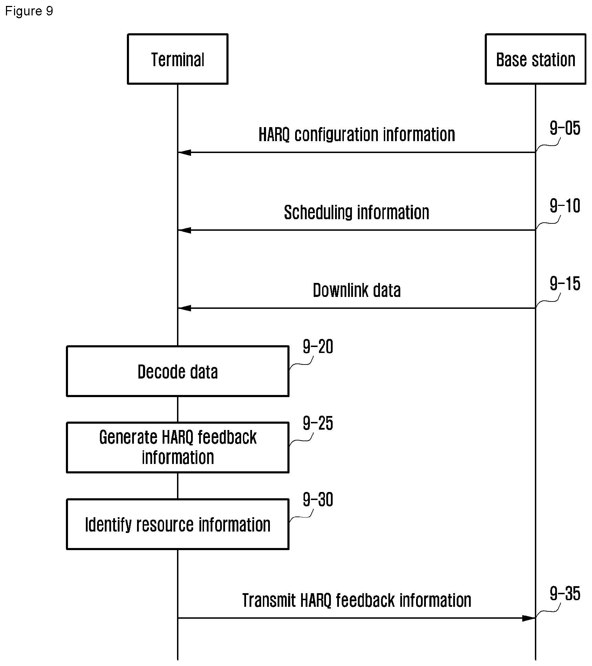

FIG. 9 is a flowchart that illustrates the operation of a base station and a terminal according to an embodiment of the disclosure.

Referring to FIG. 9, in operation 9-05, a terminal may receive HARQ configuration information from a base station. The HARQ configuration information may include at least one of the following pieces of information.
- HARQ process IDs for transmission of HARQ-ACK information
- Number of HARQ processes for transmission of HARQ-ACK information
- Time period in which HARQ-ACK information is to be transmitted
- Offset of time in which HARQ-ACK information is to be transmitted
- Format, and frequency and time resources of PUCCH for transmission of HARQ-ACK Information
- Information on whether HARQ-ACK information is expressed in TB units or CBG units
- If HARQ-ACK information is expressed in CBG units, information on the maximum number of CBGs per TB or the number of CBGs per TB, or information on the number of HARQ-ACK bits per TB

In operation 9-10, the terminal may receive scheduling information from the base station. The terminal may receive the scheduling information via DCI or higher layer signaling. For a specific method for receiving the DCI, reference may be made to operations described above in the first embodiment. In the embodiment, "DCI" stands for downlink control information. However, in the case where the embodiment is applied to the sidelink, SCI may be employed.

In operation 9-15, the base station transmits downlink data to the terminal based on the scheduling information. The terminal receives the downlink data from the base station based on the scheduling information. On the other hand, if there is no scheduling information, operation 9-15 may be omitted.

In operation 9-20, the terminal attempts to decode downlink data. For a specific method for data reception and decoding, reference may be made to the operation of the terminal described above.

In operation 9-25, the terminal may generate HARQ feedback information based on the decoding result of the data. The terminal may generate HARQ feedback information based on the HARQ configuration information. For example, the terminal may generate HARQ feedback information based on HARQ process information. For a method for generating HARQ feedback information, reference may be made to the above-described operation.

In operation 9-30, the terminal identifies resource information for transmission of HARQ feedback information. The terminal may identify resource information for transmission of feedback information based on the HARQ configuration information. The resource information may be periodic time resource information. For a detailed method for identifying a time resource, reference may be made to the above-described operation. Operation 9-30 may be performed at a time point after receiving the HARQ configuration information in operation 9-05.

In operation 9-35, the terminal may transmit HARQ feedback information to the base station.

### Second Embodiment

In the second embodiment, a method is provided in which, in order to transmit HARQ-ACK to a base station, a terminal receives a relevant configuration from the base station and aperiodically transmits the HARQ-ACK to the base station according to configuration information from the base station. A time point at which the terminal feeds back HARQ-ACK information to the base station may be determined based on a timing bit field in scheduling control information. The timing-related control information may be obtained from information configured via DCI or higher layer signaling. That is, the method provided by the embodiment is a method in which the terminal receives a PDSCH and transmits HARQ-ACK information to the base station at a specific time point after the time point at which the PDSCH is received. In the disclosure, "HARQ-ACK feedback" and "HARQ feedback" may be used interchangeably.

The method provided by the disclosure may be used as a method for reducing power consumption of a terminal by transmitting HARQ-ACK feedback only in a specific situation rather than transmitting feedback every time data reception occurs.

The method provided by the disclosure may be applied to communication between terminals performed by using a sidelink, in which case a communication initiation method between a terminal and a base station may be understood and applied as a communication initiation method between terminals, a PDSCH or a PUSCH may be physical sidelink shared channel (PSSCH), DCI may indicate sidelink control information (SCI), and feedback information may indicate sidelink feedback control information (SFCI). In addition, higher layer signaling from a base station to a terminal described in the disclosure may include information provided by one terminal to the other terminal via higher layer signaling (PC5-RRC signaling or MAC signaling). However, in the case where the method is applied to the sidelink, the base station may configure information for the terminal via higher layer signaling.

The base station may configure whether to transmit the HARQ-ACK feedback to the terminal via higher layer signaling or the terminal may configure whether to transmit the HARQ-ACK feedback to the other terminal via higher layer signaling. For example, every time a terminal configured to receive data via higher layer signaling receives the PDSCH or the PSSCH, a function of transmitting HARQ-ACK feedback of the corresponding data to the base station or a transmitting terminal may be enabled or disabled. Enabling, activating, or deactivating the transmission of HARQ-ACK feedback may be performed via higher signaling, or may be determined by a specific bit field of control information (DCI or SCI) transmitted through a physical channel. In the method described hereinafter in the disclosure, the base station deactivates the HARQ-ACK feedback transmission, so as to avoid performing feedback transmission to the terminal every time data transmission occurs. Instead, the method may cause the base station to transmit HARQ-ACK feedback information to the terminal via signaling of a physical channel. According to the method, by transmitting the feedback only in specific cases, power consumption of the terminal can be reduced and unnecessary consumption of frequency-time resources can be prevented.

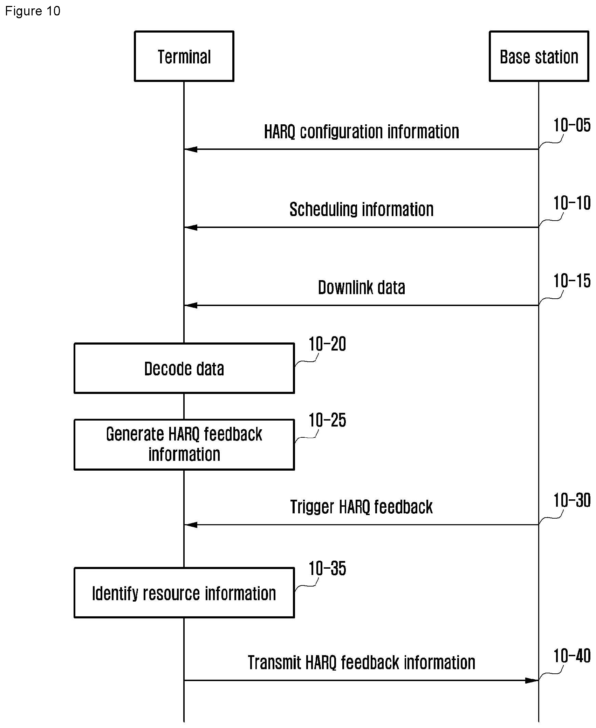

FIG. 10 is a flowchart that illustrates the operation of a terminal and a base station according to an embodiment of the disclosure.

Referring to FIG. 10, in operation 10-05, a terminal may receive HARQ configuration information from a base station. The base station may notify the terminal of HARQ configuration information via higher layer signaling in order for the terminal to transmit, to the base station, HARQ-ACK information of a PDSCH to be transmitted through the downlink. The HARQ-ACK information of the PDSCH may be HARQ-ACK information in units of TB of TBs included in the PDSCH, or in the case where CBG unit retransmission and feedback are configured, the HARQ-ACK information of the PDSCH may be HARQ-ACK information in units of CBGs. In the disclosure, the higher layer signaling may be embodied a MAC control element (MAC CE) or an RRC configuration. The HARQ configuration information may include at least one of the following pieces of information.
- HARQ process IDs for transmission of HARQ-ACK information
- Number of HARQ processes for transmission of HARQ-ACK information
- Time period in which HARQ-ACK information is to be transmitted
- Offset of time in which HARQ-ACK information is to be transmitted
- Format, and frequency and time resources of PUCCH for transmission of HARQ-ACK information
- Information on whether HARQ-ACK information is expressed in TB units or CBG units
- If HARQ-ACK information is expressed in CBG units, information on the maximum number of CBGs per TB or the number of CBGs per TB, or information on the number of HARQ-ACK bits per TB

In operation 10-15, the base station transmits a PDSCH in order to transmit data to the terminal. In order to transmit the PDSCH, in operation 10-10, the base station may first transmit, to the terminal, a PDCCH for transmission of DCI including scheduling control information, may transmit scheduling information in advance via higher layer signaling, and may activate or deactivate periodic PDSCH transmission through the PDCCH. In order to activate or deactivate the periodic or semi-persistent PDSCH transmission, the base station may transmit activation or deactivation information to the terminal by configuring, to specific values, values of specific bit fields of DCI transmitted through the PDCCH.

In operation 10-20, the terminal receives the PDSCH and decodes a transport block (TB) to be transmitted through the PDSCH. The PDSCH may include one or two TBs. The terminal may decode each TB using information such as MCS of scheduling information configured via DCI or higher layer signaling and resource allocation information. In addition, each TB may include one or more code blocks (CBs), and the code blocks may be units for performing channel coding and decoding. The terminal may determine whether decoding of each code block is successful by checking CRCs while decoding the code blocks, and may determine whether decoding of all the TBs is successful by checking CRCs included in the TBs. If the code block CRC is not included in the above determination, the terminal may determine whether decoding of the code block is successful or whether TB decoding is successful, using the TB CRC. For the configuration of the TB, the CB, and the CBG and the detailed operation of the CRC check, reference may be made to FIG. 4 and descriptions related thereto.

In operation 10-25, the terminal may generate HARQ feedback information based on the result of decoding of the data. The terminal may generate HARQ feedback information based on the HARQ configuration information. For example, the terminal may generate HARQ feedback information based on the HARQ process information.

In operation 10-30, the terminal may receive from the base station an indication of reporting of HARQ feedback information, and may trigger transmission of aperiodic HARQ feedback information based on the indication. Specific methods are as described in Method 1 to Method 4 as follows.

A method for performing transmission of HARQ-ACK feedback by a terminal may be indicated by the following methods.
- Method 1: Method 1 is a method for indicating whether to perform HARQ feedback transmission by using a specific bit field of terminal specific (UE-specific) DCI or SCI. One bit indicating whether or not to transmit HARQ feedback may be used for each TB, or one bit may indicate whether feedback transmission of the corresponding PDSCH or PSSCH is performed. In this case, the HARQ feedback information may be one bit per TB, may be 1 bit irrespective of the number of TBs included in the PDSCH, or may be 1 bit or more according to the preconfigured number of CBGs per TB. The method provided in method 1 is a group-specific method and may be transmitted to all terminals that are aware of a value of a group ID belonging to or related to a specific group.
- Method 2: Method 2 is a method for indicating whether to perform HARQ feedback transmission by using a specific bit field of terminal specific (UE-specific) DCI or SCI. The method 2 previously configures a HARQ process ID by which HARQ feedback needs to be transmitted or a HARQ process ID by which HARQ feedback does not need to be transmitted via higher layer signaling, and a terminal determines whether to transmit the HARQ feedback according to a HARQ process ID corresponding to the received PDSCH or PSSCH. A base station may configure the total number of HARQ process IDs to be used for data transmission, and may configure HARQ process IDs to be used for HARQ feedback transmission from among the total number of HARQ process IDs. The configuration may be made in a bitmap manner so as to indicate whether to transmit HARQ feedback for each HARQ process ID, or the configuration may indicate that, by configuring a threshold number of a specific HARQ process ID, PDSCH or PSSCH transmission corresponding to HARQ processes having HARQ process IDs, the threshold numbers of which are lower (or higher) than the corresponding threshold number, may not perform HARQ feedback transmission thereof. Alternatively, the control information may indicate a specific HARQ process ID value so as to transmit HARQ-ACK information for the HARQ process having the corresponding HARQ process ID to the base station. Alternatively, the control information may indicate an offset value of a specific HARQ process ID so as to transmit HARQ-ACK information for the HARQ process indicated by the offset to the base station. In the method 2, the offset of the HARQ process ID may be a value added to the reference value of a preconfigured specific HARQ process ID. The method provided by the method 2 may be transmitted to all terminals that are aware of a value of group ID belonging to or related to a specific group in a group-specific manner.

Method 3: Method 3 may notify terminals belonging to a specific group of whether to transmit HARQ-ACK feedback via group common control information (DCI or SCI). That is, the method 3 may denote that group-common control information may be used in a method of triggering HARQ-ACK feedback transmission of a specific terminal. The group-common control information may be obtained by making terminals belonging to a group to aware of a common ID value or an RNTI value and receiving control information based on the 10 value or the RNTI, or receiving control information detected in an area where preconfigured control information is transmitted. The terminal may receive, from the base station or a transmitting terminal, configuration indicating where a control information bit transmitted to the terminal itself is located in the group common control information. For example, the terminal may determine which turn the bit or bits, which is control information for the terminal itself, is located in control information and RNTI information for detecting the group common control information. The base station or the transmitting terminal may transmit to a receiving terminal the HARQ-ACK feedback-related information, based on the information configured for the receiving terminal.

Method 4: Method 4 provides a method for indicating performance of HARQ-ACK feedback using a combination of specific bit fields in control information. For example, in the case where a specific bit field of the control information is 1 bit for indicating transmission of HARQ-ACK, if the corresponding bit field (for example, HARQ-ACK timing determined later or a HARQ-ACK feedback enabler bit field) is 1 and the frequency domain resource allocation bit field is all zeros, the method may indicate to perform HARQ-ACK feedback for the control information. Thereafter, the receiving terminal transmits HARQ-ACK feedback bits for all HARQ processes or configured HARQ processes to the transmitting terminal.

In operation 10-35, the terminal identifies resource information for transmission of HARQ feedback information. The terminal may identify resource information for transmission of feedback information based on the HARQ configuration information.

In operation 10-40, the terminal may transmit HARQ feedback information to the base station.

In the embodiment, it has been described that the feedback information is limited to HARQ-ACK. However, in addition to HARQ-ACK information, the feedback information may include feedback information related to channel-state reporting, and may be applied to other types of feedback transmission.

In the method provided by the disclosure, control information indicating HARQ-ACK feedback transmission may be transmitted without control information for data scheduling.

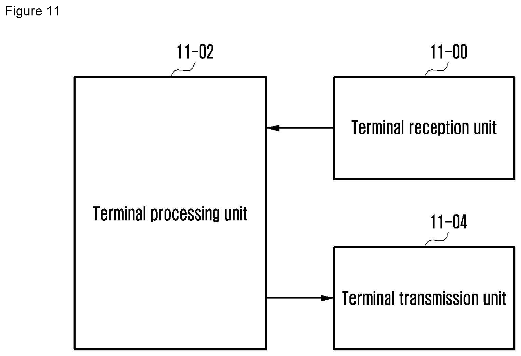

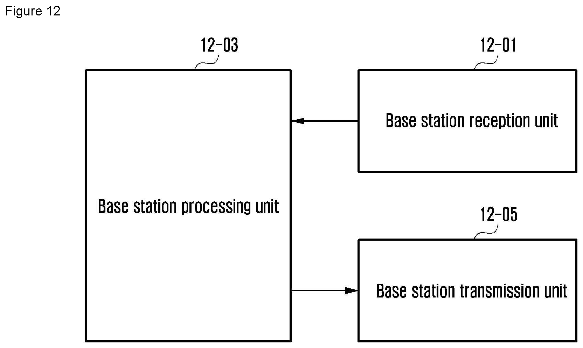

To perform the above-described embodiments, a transmission unit, a reception unit, and a processing unit of each of the terminal and the base station are illustrated in FIGS. 11 and 12. In the first and second embodiments, in order to perform operations of configuring HARQ-ACK feedback information, determining whether to transmit HARQ-ACK feedback, and performing feedback transmission, a method for transmission or reception between a base station and a terminal or a method for transmission or reception between a transmitting terminal and a receiving terminal is described. In order to perform the transmission and reception method, the reception unit, the processing unit, and the transmission unit of each of the base station and the terminal should operate according to the embodiments.

FIG. 11 is a block diagram that illustrates a configuration of a terminal according to an embodiment of the disclosure.

Referring to FIG. 11, a terminal of the disclosure may include a terminal reception unit 11-00, a terminal transmission unit 11-04, and a terminal processing unit 11-02. The terminal reception unit 11-00 and the terminal transmission unit 11-04 may collectively be referred to as a transceiver unit in the embodiment. The transceiver unit may transmit or receive a signal to or from a base station. The signal may include control information and data. To this end, the transceiver unit may include an RF transmitter that up-converts and amplifies the frequency of a transmitted signal, an RF receiver that low-noise amplifies a received signal and down-converts the frequency thereof, and the like. Also, the transceiver unit outputs, to the terminal processing unit 11-02, a signal received via a radio channel, and transmits a signal output from the terminal processing unit 11-02 via a radio channel. The terminal processing unit 11-02 may control a series of processes such that the terminal operates according to the above-described embodiments. For example, the terminal reception unit 11-00 receives control information from the base station, and the terminal processing unit 11-02 may determine feedback information and whether to transmit HARQ-ACK feedback according to the control information and preconfigured configuration information, and thus transmission preparation may be performed. Thereafter, the terminal transmission unit 11-04 may transmit scheduled feedback to the base station. In addition, the terminal processing unit 11-02 may include at least one processor. In addition, the terminal processing unit 11-02 may be referred to as a controller or processor.

According to an embodiment, the terminal processing unit 11-02 may perform control so as to receive hybrid automatic repeat request (HARQ) configuration information including HARQ process-related information from a base station, receive scheduling information of downlink data from the base station, attempt decoding of the downlink data based on the scheduling information, generate HARQ feedback information based on the HARQ process-related information and whether the decoding of the downlink data is successful, and transmit the HARQ feedback information to the base station in a periodic time resource and frequency resource determined based on the HARQ configuration information. The HARQ process-related information may include at least one of an identifier of a HARQ process for transmission of the HARQ feedback information and information on the number of HARQ processes for transmission of the HARQ feedback information. The HARQ process-related information may include at least one of information on a time period for transmission of the HARQ feedback information and information on an offset of a time for transmission of the HARQ feedback information. The size of the HARQ feedback information may be determined based on the number of HARQ processes for transmission of the HARQ feedback information and the number of transport blocks (TBs) corresponding to the HARQ process. The information on the HARQ process for generation of the HARQ feedback information may be determined based on at least one of the periodic time resource, information on the number of HARQ processes, or bitmap information indicating the HARQ process. If the downlink scheduling information in relation to the periodic time resource is not received, the terminal may transmit virtual HARQ feedback information in the periodic time resource. If the downlink scheduling information in relation to the periodic time resource is received, the terminal may transmit the HARQ feedback information, and if the downlink scheduling information in relation to the periodic time resource is not received, the terminal may not transmit the HARQ feedback-related information.

FIG. 12 is a block diagram that illustrates a configuration of a base station according to an embodiment of the disclosure.

Referring to FIG. 12, the base station of the disclosure may include a base station reception unit 12-01, a base station transmission unit 12-05, and a base station processing unit 12-03. The base station reception unit 12-01 and the base station transmission unit 12-05 may be collectively referred to as a transceiver unit in the embodiment. The transceiver unit may transmit or receive a signal to or from a terminal. The signal may include control information and data. To this end, the transceiver may include an RF transmitter that up-converts and amplifies the frequency of a transmitted signal, an RF receiver that low-noise amplifies a received signal and down-converts the frequency thereof, and the like. In addition, the transceiver unit may output, to the base station processing unit 12-03, a signal received via a radio channel, and transmit a signal output from the base station processing unit 12-03 through the radio channel. The base station processing unit 12-03 may control a series of processes such that the base station operates according to the above-described embodiments. For example, the base station processing unit 12-03 may configure control information according to HARQ-ACK feedback information of the terminal required by the base station processing unit itself, and perform control to receive feedback according to the control information. Thereafter, the base station transmission unit 12-05 transmits relevant scheduling control information, and the base station reception unit 12-01 receives the feedback information together with the scheduling information. The base station processing unit 12-03 may include at least one processor. In addition, the base station processing unit 12-03 may be referred to as a controller or processor.

The base station processing unit 12-03 may perform control so as to transmit hybrid automatic repeat request (HARQ) configuration information including HARQ process-related information to the terminal, transmit scheduling information of downlink data to the terminal, transmit the downlink data to the terminal based on the scheduling information, receive the HARQ feedback information from the terminal in a periodic time resource and frequency resource determined based on the HARQ configuration information. The HARQ feedback information may be generated based on the HARQ process-related information and whether the decoding of the downlink data is successful. The HARQ process-related information may include at least one of an identifier of a HARQ process for transmission of the HARQ feedback information, information on the number of HARQ processes for transmission of the HARQ feedback information, information on a time period for transmission of the HARQ feedback information, or an offset of a time for transmission of the HARQ feedback information. The information on the HARQ process for generation of the HARQ feedback information is determined based on at least one of the periodic time resource, information on the number of HARQ processes, or bitmap information indicating the HARQ process, and if the terminal does not receive the downlink scheduling information in relation to the periodic time resource, the base station may receive, from the terminal, virtual HARQ feedback information in the periodic time resource.

In addition to the foregoing explanations, the following enumerated aspects 1 to 15 are also relevant to the present disclosure:

### Aspect 1

A method performed by a terminal, the method comprising:
receiving hybrid automatic repeat request (HARQ) configuration information including HARQ process-related information from a base station;
receiving scheduling information for downlink data from the base station;
attempting decoding of the downlink data based on the scheduling information;
generating HARQ feedback information based on the HARQ process-related information and whether the decoding of the downlink data is successful; and
transmitting the HARQ feedback information to the base station in a periodic time resource and frequency resource determined based on the HARQ configuration information.

### Aspect 2

The method of Aspect 1, wherein the HARQ process-related information includes at least one of an identifier of a HARQ process for transmission of the HARQ feedback information or a number of HARQ processes for transmission of the HARQ feedback information.

### Aspect 3

The method of Aspect 1, wherein the HARQ process-related information includes at least one of information on a time period for transmission of the HARQ feedback information or information on a time offset for transmission of the HARQ feedback information,
wherein a size of the HARQ feedback information is determined based on a number of HARQ processes for transmission of the HARQ feedback information and a number of transport blocks (TBs) corresponding to the HARQ process, and
wherein information on a HARQ process for generation of the HARQ feedback information is determined based on at least one of the periodic time resource, information on a number of HARQ processes, or bitmap information indicating the HARQ process.

### Aspect 4

The method of Aspect 1, further comprising, in case that the terminal fails to receive downlink scheduling information related to the periodic time resource, transmitting virtual HARQ feedback information in the periodic time resource.

### Aspect 5

The method of Aspect 1, further comprising:
transmitting the HARQ feedback information in case that downlink scheduling information related to the periodic time resource is received; and
not transmitting HARQ feedback-related information in case that the terminal fails to receive the downlink scheduling information related to the periodic time resource.

### Aspect 6

A method performed by a base station, the method comprising:
transmitting hybrid automatic repeat request (HARQ) configuration information including HARQ process-related information to a terminal;
transmitting scheduling information for downlink data to the terminal;
transmitting the downlink data to the terminal based on the scheduling information; and
receiving HARQ feedback information from the terminal in a periodic time resource and frequency resource determined based on the HARQ configuration information,
wherein the HARQ feedback information is generated based on the HARQ process-related information and whether the decoding of the downlink data is successful.

### Aspect 7

The method of Aspect 6, wherein the HARQ process-related information includes at least one of an identifier of a HARQ process for transmission of the HARQ feedback information, information on a number of HARQ processes for transmission of the HARQ feedback information, information on a time period for transmission of the HARQ feedback information, or information on an offset of a time in which the HARQ feedback information is transmitted,
wherein information on a HARQ process for generation of the HARQ feedback information is determined based on at least one of the periodic time resource, information on a number of the HARQ processes, or bitmap information indicating the HARQ process, and
wherein, in case that the terminal fails to receive downlink scheduling information related to the periodic time resource, virtual HARQ feedback information is received in the periodic time resource from the terminal.

### Aspect 8

A terminal comprising:
a transceiver; and
a controller configured to:
   receive, from a base station via the transceiver, hybrid automatic repeat request (HARQ) configuration information including HARQ process-related information,
   receive, from the base station via the transceiver, scheduling information for downlink data from the base station,
   attempt decoding of the downlink data based on the scheduling information,
   generate HARQ feedback information based on the HARQ process-related information and whether the decoding of the downlink data is successful, and
   transmit, to the base station via the transceiver, the HARQ feedback information in a periodic time resource and frequency resource determined based on the HARQ configuration information.

### Aspect 9

The terminal of Aspect 8, wherein the HARQ process-related information includes at least one of an identifier of a HARQ process for transmission of the HARQ feedback information or a number of HARQ processes for transmission of the HARQ feedback information.

### Aspect 10

The terminal of Aspect 8, wherein the HARQ process-related information includes at least one of information on a time period for transmission of the HARQ feedback information or information on a time offset for transmission of the HARQ feedback information.

### Aspect 11

The terminal of Aspect 8, wherein a size of the HARQ feedback information is determined based on a number of HARQ processes for transmission of the HARQ feedback information and a number of transport blocks (TBs) corresponding to the HARQ process, and
wherein information on a HARQ process for generation of the HARQ feedback information is determined based on at least one of the periodic time resource, information on a number of HARQ processes, or bitmap information indicating the HARQ process.

### Aspect 12

The terminal of Aspect 8, wherein the controller is further configured to transmit virtual HARQ feedback information in the periodic time resource, in case that the terminal fails to receive downlink scheduling information related to the periodic time resource.

### Aspect 13

The terminal of Aspect 8, wherein the controller is further configured to:
transmit the HARQ feedback information in case that downlink scheduling information related to the periodic time resource is received, and
not transmit HARQ feedback-related information in case that the terminal fails to receive the downlink scheduling information related to the periodic time resource.

### Aspect 14

A base station comprising:
a transceiver; and
a controller configured to:
   transmit hybrid automatic repeat request (HARQ) configuration information including HARQ process-related information to a terminal,
   transmit scheduling information for downlink data to the terminal,
   transmit the downlink data to the terminal based on the scheduling information, and
   receive HARQ feedback information from the terminal in a periodic time resource and frequency resource determined based on the HARQ configuration information,
   wherein the HARQ feedback information is generated based on the HARQ process-related information and whether the decoding of the downlink data is successful.

### Aspect 15

The base station of Aspect 14, wherein the HARQ process-related information includes at least one of an identifier of a HARQ process for transmission of the HARQ feedback information, information on a number of HARQ processes for transmission of the HARQ feedback information, information on a time period for transmission of the HARQ feedback information, or information on an offset of a time in which the HARQ feedback information is transmitted,
wherein information on a HARQ process for generation of the HARQ feedback information is determined based on at least one of the periodic time resource, information on a number of the HARQ processes, or bitmap information indicating the HARQ process, and
wherein, in case that the terminal fails to receive downlink scheduling information related to the periodic time resource, virtual HARQ feedback information is received in the periodic time resource from the terminal.

While the disclosure has been shown and described with reference to various embodiments thereof, it will be understood by those skilled in the art that various changes in form and details may be made therein without departing from the spirit and scope of the disclosure as defined by the appended claims and their equivalents.

## Claims

1. A method performed by a terminal, the method comprising:
receiving (10-05), from a base station, hybrid automatic repeat request, HARQ, configuration information;
receiving (10-10), from the base station, first downlink control information, DCI, including scheduling information for downlink data;
attempting (10-15, 10-20) decoding of the downlink data based on the scheduling information;
receiving (10-30), from the base station, second DCI including an information field associated with a HARQ feedback;
generating (10-35) HARQ feedback information for the downlink data based on the second DCI including the information field; and
transmitting (10-40), to the base station, the HARQ feedback information,
wherein the information field included in the second DCI is set to 1 for the HARQ feedback information, and
wherein a transmission timing for the HARQ feedback information is determined based on the second DCI.

2. The method of claim 1,
wherein the HARQ configuration information includes at least one of an identifier of a HARQ process for transmission of the HARQ feedback information, a number of HARQ processes for transmission of the HARQ feedback information, information on a time period for transmission of the HARQ feedback information or information on a time offset for transmission of the HARQ feedback information.

3. The method of claim 1,
wherein the second DCI further includes a frequency domain resource assignment field, and
wherein all bits of the frequency domain resource assignment field are set to 0 for the HARQ feedback information.

4. The method of claim 1,
wherein, in case that information associated with a HARQ feedback timing is configured, the HARQ feedback information for the downlink data is not transmitted before receiving the second DCI.

5. A method performed by a base station, the method comprising:
transmitting (10-05), to a terminal, hybrid automatic repeat request, HARQ, configuration information;
transmitting (10-10), to the terminal, first downlink control information, DCI, including scheduling information for downlink data;
transmitting (10-15), to the terminal, the downlink data based on the scheduling information;
transmitting (10-30), to the terminal, second DCI including an information field associated with a HARQ feedback; and
receiving (10-40), from the terminal, HARQ feedback information for the downlink data based on the second DCI including the information field,
wherein the information field included in the second DCI is set to 1 for the HARQ feedback information, and
wherein a transmission timing for the HARQ feedback information is determined based on the second DCI.

6. The method of claim 5,
wherein the HARQ configuration information includes at least one of an identifier of a HARQ process for transmission of the HARQ feedback information, information on a number of HARQ processes for transmission of the HARQ feedback information, information on a time period for transmission of the HARQ feedback information, or information on a time offset for transmission of the HARQ feedback information.

7. The method of claim 5,
wherein the second DCI further includes a frequency domain resource assignment field, and
wherein all bits of the frequency domain resource assignment field are set to 0 for the HARQ feedback information.

8. The method of claim 5,
wherein, in case that information associated with a HARQ feedback timing is configured, the HARQ feedback information for the downlink data is not transmitted by the terminal before the second DCI is received by the terminal.

9. A terminal comprising:
a transceiver (11-00, 11-04); and
a controller (11-02) configured to:
receive (10-05), from a base station via the transceiver (11-00, 11-04), hybrid automatic repeat request, HARQ, configuration information,
receive (10-10), from the base station via the transceiver (11-00, 11-04), first downlink control information, DCI, including scheduling information for downlink data,
attempt (10-15) decoding of the downlink data based on the scheduling information,
receive (10-30), from the base station via the transceiver (11-00, 11-04), second DCI including an information field associated with a HARQ feedback,
generate (10-35) HARQ feedback information for the downlink data based on the second DCI including the information field, and
transmit (10-40), to the base station via the transceiver (11-00, 11-04), the HARQ feedback information,
wherein the information field included in the second DCI is set to 1 for the HARQ feedback information, and
wherein a transmission timing for the HARQ feedback information is determined based on the second DCI.

10. The terminal of claim 9, wherein the HARQ configuration information includes at least one of an identifier of a HARQ process for transmission of the HARQ feedback information, a number of HARQ processes for transmission of the HARQ feedback information, information on a time period for transmission of the HARQ feedback information or information on a time offset for transmission of the HARQ feedback information.

11. The terminal of claim 9, wherein the second DCI further includes a frequency domain resource assignment field, and
wherein all bits of the frequency domain resource assignment field are set to 0 for the HARQ feedback information.

12. The terminal of claim 9,
wherein, in case that information associated with a HARQ feedback timing is configured, the HARQ feedback information for the downlink data is not transmitted before receiving the second DCI.

13. A base station comprising:
a transceiver (12-01, 12-05); and
a controller (12-03) configured to:
transmit (10-05), to a terminal via the transceiver (12-01, 12-05), hybrid automatic repeat request, HARQ, configuration information,
transmit (10-10), to the terminal via the transceiver (12-01, 12-05), first downlink control information, DCI, including scheduling information for downlink data,
transmit (10-15), to the terminal via the transceiver (12-01, 12-05), the downlink data based on the scheduling information,
transmit (10-30), to the terminal via the transceiver (12-01, 12-05), second DCI including an information field associated with a HARQ feedback,
receive (10-40), from the terminal via the transceiver (12-01, 12-05), HARQ feedback information for the downlink data based on the second DCI including the information field,
wherein the information field included in the second DCI is set to 1 for the HARQ feedback information, and
wherein a transmission timing for the HARQ feedback information is determined based on the second DCI.

14. The base station of claim 13,
wherein the second DCI further includes a frequency domain resource assignment field, and
wherein all bits of the frequency domain resource assignment field are set to 0 for the HARQ feedback information.

15. The base station of claim 13,
wherein, in case that information associated with a HARQ feedback timing is configured, the HARQ feedback information for the downlink data is not transmitted by the terminal before the second DCI is received by the terminal.
